Europäisches Patentamt

European Patent Office

Office européen des brevets

(19)

(11) Veröffentlichungsnummer : **0 261 115**
B1

(12) EUROPÄISCHE PATENTSCHRIFT

(45) Veröffentlichungstag der Patentschrift :
20.09.89

(21) Anmeldenummer : 86903346.4

(22) Anmeldetag : 21.05.86

(86) Internationale Anmeldenummer :
PCT/EP 86/00309

(87) Internationale Veröffentlichungsnummer :
WO/8607080 (04.12.86 Gazette 86/26)

(51) Int. Cl.⁴ : **C 09 B 61/00**

(54) VERFAHREN ZUR HERSTELLUNG VON FARBSTOFFEN AUS PFLANZENTEILEN.

(30) Priorität : 29.05.85 DE 3519142

(43) Veröffentlichungstag der Anmeldung :
30.03.88 Patentblatt 88/13

(45) Bekanntmachung des Hinweises auf die Patenterteilung : 20.09.89 Patentblatt 89/38

(84) Benannte Vertragsstaaten :
AT BE CH DE FR GB IT LI LU NL SE

(56) Entgegenhaltungen :
FR–A– 1 233 255
US–A– 1 399 014
Chemical Abstract, vol. 81, no. 3, 22 July 1974,
Columbus, Ohio (US), R. Jadwiga: "Stability of anthocyanin pigment concentrates obtained from black
current press cake", p. 222, abstract 12025x

(73) Patentinhaber : MASID VERWALTUNGS-GMBH & CO.
FORSCHUNGS-KG
Rosenaustrasse 25a
D-6072 Dreieich-Sprendlingen (DE)

(72) Erfinder : ECK, Gerhard
Karl-Nahrgang-Str. 13
D-6073 Egelsbach (DE)

(74) Vertreter : Katscher, Helmut, Dipl.-Ing.
Bismarckstrasse 29
D-6100 Darmstadt (DE)

## Beschreibung

Die Erfindung betrifft ein Verfahren zur Herstellung von Farbstoffen aus Pflanzenteilen, die getrocknet werden.

Es sind zahlreiche derartige Verfahren bekannt. Diesen Verfahren ist gemeinsam, daß nur'bestimmte, hierfür besonders geeignete Färberpflanzen verwendet werden, beispielsweise Färberginster, Färberwaid, Färberesade, Indigo, Rotholz.

Diese Pflanzen müssen unter Einhaltung einer Sammelvorschrift sorgsam gesammelt werden, wobei ausschließlich lebende und gesunde Pflanzen bzw. deren Teile gesammelt werden dürften. Nach vorsichtiger Trocknung, die bei einer Temperatur von höchstens 60 °C erfolgt, werden die getrockneten Pflanzenteile üblicherweise ausgekocht und ausgelaugt und der Farbstoff wird anschließend ausgefällt und getrocknet. In den meisten Fällen muß der Farbstoff nach der Trocknung gemahlen und gemischt werden.

Die mit den bekannten Verfahren erhaltenen Farbstoffe ergeben — mit wenigen Ausnahmen, wie beispielsweise Krapprot und Indigo — keine leuchtenden Farben. Die so hergestellten Farbstoffe sind wenig haltbar und können nur als Wasserfarbe Verwendung finden.

Der Anwendungsbereich der nach den bekannten Verfahren hergestellten Farbstoffe ist insbesondere dadurch stark eingeschränkt, daß die Farben nicht oder nur wenig lichtecht sind. Weil diese Herstellungsverfahren sehr umständlich und zeitaufwendig sind, was schon mit der Einhaltung der jeweiligen Sammelvorschrift beginnt, sind die so gewonnenen Farbstoffe sehr teuer; die Verfahren sind für eine industrielle Anwendung kaum geeignet.

Die nach den bekannten Verfahren aus Pflanzenteilen gewonnenen Farbstoffe sind auch nur sehr begrenzt einsetzbar, weil sie nicht für der Witterung ausgesetzte Flächen geeignet sind und weil sie nicht auf jedem Untergrund haften; dies ist insbesondere auch dadurch bedingt, daß die Farbstoffe nicht mit basisch wirkendem Material mischbar sind und deshalb nicht mit Kalk und anderen Verputzmaterialien gemischt werden können.

Aus der US-A-1 399 014 ist es bekannt, Farbstoffe aus Pflanzenteilen zu gewinnen, indem die Pflanzenteile in einer Sodalösung extrahiert werden. Dieses Verfahren ist jedoch sehr aufwendig, weil zunächst eine Extraktionslösung hergestellt werden muß, in der die Pflanzenteile gekocht werden. Die festen Bestandteile müssen als Abfallprodukte entfernt werden, bevor das Extrakt eingedampft wird. Die Entnahme der dabei benötigten Pflanzenteile, wie Holz, Rinde der Zweige, schädigt die Pflanze. Die erhaltenen Farbstoffe sind nicht lichtecht und ergeben keine leuchtenden Farben.

Aufgabe der Erfindung ist es daher, ein Verfahren der eingangs genannten Gattung zu schaffen, mit dem in einfacher Weise ohne Einschränkung auf bestimmte Färberpflanzen aus Pflanzenteilen beliebige, insbesondere auch leuchtende Farben hergestellt werden können, die mit beliebigen anderen Farben mischbar, lichtecht und unbegrenzt haltbar sind.

Diese Aufgabe wird erfindungsgemäß durch ein Verfahren gelöst, das gekennzeichnet ist durch die Verfahrensschritte:

a) die Pflanzenteile werden bei mindestens 70 °C getrocknet;

b) die getrockneten Pflanzenteile werden pulverisiert;

c) die pulverisierten Pflanzenteile werden in wässriger Lösung auf einen von 7 abweichenden pH-Wert eingestellt.

Die hohen Trocknungstemperaturen bewirken, daß die Farbstoffe in den Pflanzenteilen lichtecht werden, wobei zur Beschleunigung des Verfahrens auch verhältnismäßig hohe Temperaturen von beispielsweise 360 °C angewandt werden können, sofern nur darauf geachtet wird, daß die Pflanzenteile nicht bräunen oder sich in anderer Weise verfärben.

Obwohl die Pflanzenteile nach dem Trocknungsvorgang wegen der enthaltenen pflanzlichen Stützstoffe nur eine matte Farbe haben, erhält man leuchtende und ggf. kräftige Farben; dies geschieht durch den anschließenden Verfahrensschritt, in dem die pulverisierten Pflanzenteile in sauren oder basischen Zustand gebracht werden. Vorzugsweise werden die pulverisierten Pflanzenteile in wässriger Lösung auf etwa denjenigen pH-Wert eingestellt, den die Pflanzenteile im frischen Zustand hatten. Dadurch ist es möglich, alle Farben zu erhalten, die es in der Pflanzenwelt gibt. Vorzugsweise wird ein Bindemittel zugegeben, wodurch besonders leuchtende Farbtöne erreicht werden. Die getrockneten, pulverisierten Pflanzenteile können auch zunächst mit der Säure oder Lauge in trockener Form zusammengebracht und erst später, ggf. nach Lagerung, mit Flüssigkeit gemischt werden.

Vorteilhafte Ausgestaltung des Erfindungsgedankens sind Gegenstand weiterer Unteransprüche.

Im Gegensatz zu herkömmlichen Verfahren, bei denen nur spezielle Pflanzen bzw. deren Teile sorgfältig gesammelt werden müssen, werden für das erfindungsgemäße Verfahren vorzugsweise ausschließlich abgestorbene Pflanzenteile bzw. Pflanzen gesammelt, die die Pflanze von selbst abwirft, beispielsweise Blütenblätter, Laub, Früchte, Schalen der Früchte usw.. So können beispielsweise die Blütenblätter des Rapses zur Gewinnung eines gelben Farbstoffs mittels einer Saugvorrichtung dann eingesammelt werden, nachdem die Pflanze befruchtet worden ist und verblüht. Dadurch kann sich die Pflanze vermehren, ohne durch den Vorgang des Einsammelns beschädigt oder in ihrem Wachstum oder in ihrer Vermehrung behindert zu werden.

Ein besondere Sammelvorschriften berücksichtigendes behutsames Einsammeln ist nicht erforderlich. Es können Sauggeräte benutzt werden, die das Sammelgut zerkleinern, pressen, quetschen oder in anderer Weise beschädigen, selbst wenn dann eine Verfärbung auftritt. Daher können auch große Mengen des benötigten Sammelgutes rationell eingesammelt werden.

Da beim Einsammeln oder danach auftretende Farbänderungen nicht stören, ist es nicht erforderlich, den Trocknungsvorgang rasch durchzuführen oder — wenn dies nicht möglich ist — irgendeine Konservierungsmaßnahme zu ergreifen.

Das Trocknen der Pflanzenteile, das vorzugsweise bei 70 bis 80 °C, aber auch bei einer höheren Temperatur erfolgen kann, kann unmittelbar in einer hierfür geeigneten Darre erfolgen; es ist aber auch möglich, zunächst einen natürlichen Trocknungsvorgang durchzuführen und die Pflanzenteile anschließend zum Nachtrocknen in eine Darre zu geben.

Nach dem Trocknen werden die Pflanzenteile pulverisiert, beispielsweise in Mörsermühlen, Zentrifugalsiebmühlen, Schlagrotormühlen, Abriebmaschinen o. dgl.

Anschließend wird ein saurer oder basischer Stoff zugegeben, der dafür sorgt, daß die Pflanzenteile, die beim Trocknen eine matte Farbe angenommen haben, wieder eine leuchtende Farbe erhalten. Vorzugsweise werden die Pflanzenteile wieder auf denjenigen pH-Wert eingestellt, den sie im frischen Zustand, d. h. beim Einsammeln, hatten.

Hierzu wird den gemahlenen Pflanzenteilen beispielsweise Zitronensäure, Kieselsäure oder eine andere organische Säure zugegeben. Anschließend wird vorzugsweise ein Bindemittel zugegeben. Der so gewonnene Farbstoff zeigt jetzt die ursprüngliche leuchtende Farbe, den die Pflanzenteile im frischen Zustand hatten.

Der gewählte pH-Wert kann bei bestimmten Pflanzenarten bzw. deren Teilen einen wesentlichen Einfluß auf die erhaltene Farbe haben. So besteht beispielsweise die Möglichkeit, blauen Farbstoff dadurch zu gewinnen, daß getrockneten und pulverisierten Holunderbeeren Natronpulver zugegeben wird. Wird stattdessen Zitronensäure oder eine andere organische Säure zugegeben, so erhält man einen roten Farbstoff. Die erhaltenen Rot- oder Blautöne sind außerdem abhängig von der Trocknungstemperatur bzw. der Trocknungszeit. Alle so erhaltenen Farbtöne sind lichtecht.

Als basisches Material kann beispielsweise auch Pflanzenasche, vorzugsweise weiße Pflanzenasche mit den pulverisierten Pflanzenteilen vermischt werden.

Um die erhaltenen Farbstoffe vor Schädlingsbefall (Pilze, Flechten, Insekten usw.) zu schützen, können z. B. Salze oder Borax hinzugegeben werden.

Als Bindemittel können grundsätzlich alle natürlichen oder künstlichen Bindemittel verwendet werden. Vorzugsweise werden ungiftige Bindemittel verwendet, um ungiftige Farbstoffe zu erhalten.

Die Verarbeitung des so erhaltenen Farbstoffs kann in einfacher Weise dadurch erfolgen, daß der pulverisierte Farbstoff mit Wasser vermischt wird. Man erhält eine flüssige, sprühfähige Farbe. Um eine pasteuse, streichfähige Farbe zu erhalten, gibt man als Verdickungsmittel beispielsweise Zellulose aus pulverisiertem Holz oder ähnlichem zu. Die Farbe ist dann als Wasserfarbe oder bei entsprechendem Salzgehalt als Imprägnierungsmittel für Hölzer oder als Lasurfarbe verwendbar.

Durch Zugabe von Sauermilch erhält man eine Deckfarbe, wobei das Bindemittel zugleich den pH-Wert in den sauren Bereich verlagert, so daß die Zugabe von anderen sauren Stoffen nicht erforderlich ist. In verdünnter Form kann diese Farbe auch als Lasurfarbe verwendet werden. Sie ist als Innenfarbe und Außenfarbe geeignet.

Durch die Verwendung von Leinölfirnis oder einem sonstigen Öl als Bindemittel erhält man eine Ölfarbe.

Man kann die Farbe z. B. in Kreidepulver einrühren, formen und trocknen, um ungiftige Kreidefarben oder Pastellfarben zu erhalten. Die Farben lassen sich auch in flüssiges Wachs einrühren, um Wachsmalstifte oder farbige Wachsknete zu erhalten.

Um Farbe für Kosmetika zu erhalten, rührt man den Farbstoff in entsprechende Cremes ein. Wenn Heilkräuter verwendet wurden, kann unter Beachtung der für die Heilkräuter bestehenden Sammel- und Behandlungsvorschriften die heilende Wirkung auch im Farbstoff erhalten bleiben.

Durch die Zugabe von Kalk und anderen Verputzmaterialien als alkalische Stoffe ist der Farbstoff für den Hausverputz geeignet, weil im Gegensatz zu anderen Pflanzenfarben die Mischung mit dem Verputzmaterial keine unerwünschte Verfärbung ergibt.

Das Haftvermögen der Farbstoffe auf Steinen und Verputz ist besonders günstig, wenn Kieselgel bzw. Kieselgur zugesetzt werden. Im Gegensatz zu anderen Pflanzenfarben tritt auch hier keine unerwünschte Farbänderung ein.

Ein seidenmatter, auf jedem Untergrund besonders gut haftender Farbstoff wird durch die Verwendung von Holunderterpenen als Bindemittel erhalten.

Die nach dem erfindungsgemäßen Verfahren gewonnenen Farbstoffe können mit nahezu jedem beliebigen Material gemischt bzw. in dieses eingearbeitet werden, ohne daß sich irgendwelche unerwünschten Eigenschaften ergeben, beispielsweise Giftwirkung wie bei zahlreichen Industriefarben. Bei höherem Anteil an pflanzlichen Stützstoffen kann die gewonnene Farbmasse auch unmittelbar zu Gegenständen verarbeitet werden, beispielsweise zu Fliesen, Dämmplatten oder ähnlichem. Durch die Mischung mit Zellulose oder Holzpulver kann eine Knetmasse erhalten werden, aus der Körper modelliert werden können, die nach der Trocknung mechanisch bearbeitet werden können.

Obwohl die Farbe des pflanzlichen Ausgangsmaterials abhängig von den Wuchs- und Sammelbedingungen unterschiedlich sein kann, lassen sich gleichbleibende Farbtöne dadurch erreichen, daß unterschiedliche Farbtöne in der jeweils gewünschten Weise miteinander gemischt werden. Durch diesen Farbausgleich ist eine weitgehend kontinuierliche Farbstoffherstellung mit gleichbleibendem Farbton möglich.

Zweckmäßigerweise erfolgt einige Stunden nach der Herstellung noch einmal eine Farbkontrolle unter dem Mikroskop, da zu diesem Zeitpunkt alle mit dem Verfahren verbundenen Reaktionen abgeschlossen sind.

Trockene Säuren, wie z. B. Salzsäure, Zitronensäure oder trockene Laugen, wie z. B. Soda, Ätznatron sind im Handel in pulvriger oder körniger Form erhältlich und können mit den pulverisierten Pflanzenteilen gemischt werden, beispielsweise um in trockener Form gelagert zu werden. Bei späterer Zugabe von Flüssigkeit, die notwendig ist, um die Farbe herzustellen, löst sich darin die trockene Säure oder trockene Lauge auf und wird dabei gleichzeitig im entsprechenden Verhältnis verdünnt und die Farbe intensiv und stark oder leuchtend. Das hat den Vorteil, daß man bereits fertiges Material zur Verfügung hat, das man bei Bedarf für die Farbherstellung verwenden kann, ohne jedesmal neu Säure oder Lauge abmessen zu müssen.

Man kann die pulverisierten Pflanzenteile auf den pH-Wert einstellen, den die Pflanze im frischen Zustand hatte. Eine Überdosierung an Säure oder Lauge schadet nicht. Der Farbwert (Helligkeit, Intensität, Leuchtkraft) bleibt stets der gleiche. Es muß jedoch eine Mindestdosierung an Säure oder Lauge zugegeben werden, die in etwa dem pH-Wert des Frischezustandes (bei Säuren) entspricht oder den pH-Wert im selben Maße, jedoch in Richtung basisch, verändert.

Um den Farbwert zu ändern, gibt es zwei Möglichkeiten :

a) Man unterschreitet diese Mindestdosierung von Säure oder Lauge, dann ist die Farbe nicht mehr so intensiv und leuchtend.

b) Man erhöht die Trocknungstemperatur, die mindestens bei 70 °C-80 °C liegen muß.

Trocknet man z. B. bei einer Temperatur von 80 °C-90 °C ungefähr und ändert den pH-Wert dann, so wird die Farbe später noch intensiver und leuchtender. Die Dosis Säure oder Lauge, die man hierbei hinzugibt, ist die gleiche wie vorher. Eine Überdosierung von Säure und Lauge ändert den Farbwert auch hier nicht. Eine Unterschreitung der Mindestdosis ergibt eine Farbe mit der Leuchtkraft und Intensität wie bei einer Trocknung von 70 °C-80 °C unter Beibehaltung der Mindestdosierung.

Trocknet man bei einer Temperatur von ca. 90 °C-100 °C und achtet dabei darauf, daß keine Braunfärbung eintritt, so erhält man später eine grell leuchtende Farbe, die auch in der Dunkelheit bei geringer Lichteinwirkung ähnlich oder genauso leuchtet, wie die im Handel übliche « Leuchtfarbe ». Auch diese kann durch Unterschreitung der Dosis von Säure oder Lauge, die mindestens erforderlich ist, eingestellt werden. Dieser Effekt läßt sich erzielen, wenn das Trockengut den angegebenen Wärmegraden längere Zeit ausgesetzt ist. Man kann die Temperaturen auch erhöhen (z. B. 360 °C), nur muß auch hier darauf geachtet werden, daß die Pflanzenteile nicht bräunen.

Es ist also gleichgültig, bei welcher Temperatur man trocknen möchte, um eine Farbe zu erhalten, die eine Mindestleuchtkraft besitzt. Bei Pflanzenteilen, die längere Zeit einer höheren Temperatur als 70 °C-80 °C ausgesetzt waren, erreicht man diese Mindestleuchtkraft durch Unterschreitung der Mindestdosis von Säure oder Lauge ; eine Erhöhung der Leuchtkraft erreicht man durch die Zuführung dieser Mindestdosis oder deren Überschreitung.

Werden Pflanzenteile bei einer Temperatur von ca. 90 °C oder mehr getrocknet und dieser Temperatur länger ausgesetzt, so gleichen sie sich untereinander im Farbwert an, d. h., daß das daraus gewonnene Pulver von Charge zu Charge oder kontinuierlich immer die gleiche Farbe ergibt, die dann von Charge zu Charge keinen sichtbaren Unterschied mehr feststellen läßt.

## Patentansprüche

1. Verfahren zur Herstellung von Farbstoffen aus Pflanzenteilen, die getrocknet werden, gekennzeichnet durch die Verfahrensschritte :

a) die Pflanzenteile werden bei mindestens 70 °C getrocknet ;

b) die getrockneten Pflanzenteile werden pulverisiert ;

c) die pulverisierten Pflanzenteile werden in wässriger Lösung auf einen von 7 abweichenden pH-Wert eingestellt.

2. Verfahren nach Anspruch 1, dadurch gekennzeichnet, daß die Pflanzenteile auf etwa denjenigen pH-Wert eingestellt werden, den die Pflanzenteile im frischen Zustand hatten.

3. Verfahren nach Anspruch 1, dadurch gekennzeichnet, daß nach dem Verfahrensschritt c) ein Bindemittel zugegeben wird.

4. Verfahren nach Anspruch 1, dadurch gekennzeichnet, daß eine organische Säure zugegeben wird.

5. Verfahren nach Anspruch 1, dadurch gekennzeichnet, daß Zitronensäure zugegeben wird.

6. Verfahren nach Ansprüchen 1 und 3, dadurch gekennzeichnet, daß Sauermilch zugegeben wird.

7. Verfahren nach Anspruch 1, dadurch gekennzeichnet, daß ein basischer Stoff zugegeben wird.

8. Verfahren nach Anspruch 7, dadurch gekennzeichnet, daß Natron zugegeben wird.

9. Verfahren nach Anspruch 7, dadurch gekennzeichnet, daß Pflanzenasche zugegeben wird.

10. Verfahren nach einem der Ansprüche 1 bis 9, dadurch gekennzeichnet, daß zur Konservierung Salz bzw. Borax zugegeben wird.

11. Verfahren nach Anspruch 1, dadurch gekennzeichnet, daß die pulverisierten getrockneten Pflanzenteile mit einer Säure oder Lauge in trockener Form gemischt werden und später Flüssigkeit hinzugegeben wird.

## Claims

1. Method for obtaining dyes from vegetable elements which are dried, characterised by the process stages :
   a) the vegetable elements are dried at at least 70 °C ;
   b) the dried vegetable elements are pulverised ;
   c) the pulverised vegetable elements are adjusted in aqueous solution to a pH value differing from 7.

2. Method according to Claim 1, characterised in that the vegetable elements are adjusted to more or less the pH value which the vegetable elements had in the fresh condition.

3. Method according to Claim 1, characterised in that, after the (process stage c), a binder is added.

4. Method according to Claim 1, characterised in that an organic acid is added.

5. Method according to Claim 1, characterised in that citric acid is added.

6. Method according to Claims 1 and 3, characterised in that sour milk is added.

7. Method according to claim 1, characterised in that a basic substance is added.

8. Method according to Claim 7, characterised in that soda is added.

9. Method according to Claim 7, characterised in that vegetable ash is added.

10. Method according to one of Claims 1 to 9, characterised in that, for preservation, salt or borax is added.

11. Method according to Claim 1, characterised in that the pulverised dry vegetable elements are mixed with an acid or alkali in dry form and liquid is added later.

## Revendications

1. Procédé de fabrication de colorants à partir d'éléments végétaux, qui sont séchés, caractérisé par les étapes de production suivantes :
   a) les éléments végétaux sont séchés à au moins 70 °C ;
   b) les éléments végétaux séchés sont pulvérisés ;
   c) les éléments végétaux pulvérisés sont mis à un pH en solution aqueuse différent de 7.

2. Procédé selon la revendication 1 caractérisé en ce que les éléments végétaux sont réglés à un pH correspondant a peu près au pH que les éléments végétaux avaient à leur état frais.

3. Procédé selon la revendication 1 caractérisé en ce qu'on ajoute un agent liant après l'étape de procédé c).

4. Procédé selon la revendication 1 caractérisé en ce qu'on ajoute un acide organique.

5. Procédé selon la revendication 1 caractérisé en ce qu'on ajoute de l'acide citrique.

6. Procédé selon les revendications 1 et 3 caractérisé en ce qu'on ajoute du lait caillé.

7. Procédé selon la revendication 1 caractérisé en ce qu'on ajoute une substance basique.

8. Procédé selon la revendication 7 caractérisé en ce qu'on ajoute de la soude.

9. Procédé selon la revendication 7 caractérisé en ce qu'on ajoute des cendres végétales.

10. Procédé selon les revendications 1 à 9 caractérisé en ce qu'on ajoute, pour des raisons de conservation, un sel ou du borax.

11. Procédé selon la revendication 1 caractérisé en ce que les éléments végétaux séchés pulvérisés sont mélangés avec un acide ou une base sous forme sèche et en ce qu'on ajoute ultérieurement un liquide.